# EUROPEAN PATENT APPLICATION

(11) **EP 0 607 477 A1**
(43) Date of publication of application: **27.07.1994**
(21) Application number: 93100620.9
(22) Date of filing: 16.01.1993
(51) Int. Cl.: B65G 15/38, D21F 7/08, D04H 13/00

(54) **Conveying belt**

(71) Applicant: ICHIKAWA WOOLEN TEXTILE CO.,LTD., Tokyo 113 (JP)
(72) Inventor: Misawa, Hironori, Nagareyama-shi, Chibe-ken (JP); Sakagami, Takeshi, Kashiwa-shi, Chiba-ken (JP); Ogiwara, Takeshi, Ichikawa-shi, Chiba-ken (JP)
(74) Representative: Naumann, Ulrich, Dr.-Ing.

(57) **Abstract**

A conveying belt for carrying heavy articles at high temperatures, for example hot aluminum extrusions, comprises a heat-resistant fabric layer integrally secured by needle punching to a flexible, high-strength, low-elongation ground fabric having a heat resistance of at least 150°C. The preferred belt includes a thin layer of heat-resistant fabric on the opposite side of the ground fabric, and a layer of heat-resistant resin, also on said opposite side, for improving the friction coefficient between the belt and its drive pulley.

## Description

This invention relates to conveying belts, and more particularly to conveying belts adapted for conveying hot articles, such as extruded aluminum shapes or molded glass, from an extruding or molding apparatus to the location of a subsequent processing stage, or from one subsequent processing stage to another, while cooling of the articles takes place as they travel on the belt.

Aluminum shapes are typically manufactured by the steps of: extruding molten aluminum through an extruding die in an aluminum extruding press, and successively transferring the extruded aluminum products from one table to another in a series of tables, which may include an initial table, a run-out table, a transfer table, a cooling table, or a stretcher table. As the articles are transferred from table to table, they are cooled from an initial high temperature, typically in the range of 550-600°C.

In a conventional aluminum extruding operation, the formed aluminum products are transferred between the tables in the series by a plurality of attachment chains which transfer the articles in a direction perpendicular to the extruding direction. Each attachment chain is constituted by a large number of links (for example, 4000-5000). Each link is provided with a laterally symmetrical holding plate to which is fixed a pad of a heat-resistant material.

Attachment chains are subject to several problems. Because an attachment chain consists of a large number of links, the replacement of pads takes a lot of time. Also, since a pad is fixed to each link of the attachment chain, gaps exist between adjacent pads, and the formed aluminum products are liable to be bitten in the gaps, and damaged or deformed.

One approach to the avoidance of the problems inherent in the use of attachment chains is to substitute an endless, pulley driven, flat belt. A widely used conventional form of flat belt is formed by adhesively attaching a flexible, cushioned, needle-punched, non-woven fabric made of a heat resistant fibers, to a tight canvas sheet woven from a polyester span yarn, or to a ground fabric formed of a plurality of canvas sheets laminated together by an adhesive. The canvas sheet or laminated canvas sheets are used in order to achieve the required tensile strength and to avoid excessive ductility.

Another type of flat belt used for the transport of hot aluminum articles is formed by laminating and sewing a plurality of canvas sheets woven from a multi-filament yarn of a para-aromatic polyamide fiber used both as the warp and as the weft.

In recent years, aluminum has been used in increasing quantities because of its desirable properties, particularly its light weight and its resistance to corrosion. Large sized aluminum shapes have been in great and rapidly increasing demand as energy-saving or resource-saving materials.

Large aluminum shapes are used for vehicles such as trucks, for containers, and for building materials and the like. These large aluminum shapes are both physically heavy and high in heat capacity. Accordingly, they apply large mechanical and thermal loads to the flat belt on which they are transported.

Particularly in the case of large aluminum shapes, and also in the transportation of other hot, heavy articles, several problems are encountered in the use of a flat belt comprising a flexible, cushioned, needle punched, non-woven fabric adhesively secured to a tight polyester canvas or to a hard belt base material formed of a plurality of laminated canvas layers. Heat, and mechanical stresses, including tensile force, bending, deformation and the like, cause fatigue and deterioration of the adhesive between canvas layers or between the canvas and the non-woven fabric. Because of the fatigue and deterioration of the adhesive, separation of layers occurs, and the useful life of the belt is shortened. Also, since the base material formed by laminating a plurality of canvas layers is hard, slipping tends to occur between the driving pulley and the belt upon starting and stopping.

In the case of a flat belt formed by laminating and sewing a plurality of canvas layers woven from a multi-filament yarn of para-aromatic polyamide fiber, the hot articles being conveyed are in direst contact with the belt fabric, and heat is directly transmitted to the fabric. The heat promotes thermal deterioration. The belt tends to extend in length as it wears, and both the sewing yarn and the fabric yarn become frayed. As a result, the service life of the belt is shortened.

Because of the increasing demand for a large aluminum shapes, there is a need for improvement in the durability of article-transporting belts used in the manufacture of these shapes.

An object of this invention is to provide a conveying belt capable of stably conveying high temperature formed products, such as aluminum shapes.

It is also an object of the invention to provide a conveying belt with improved thermal and mechanical properties such that it resists deterioration over a long period of time.

The invention addresses the above objects by providing a conveying belt comprising a fiber layer composed of a heat resistant fibers joined to a flexible ground fabric composed of a fiber material having high strength and a low elongation In accordance with the invention, the ground fabric is selected to have a resistance against heat of at least 150°C, and the fiber layer is integrally joined to the ground fabric by needle punching.

The ground fabric preferably comprises a fiber having an initial modulus of at least 300kg/mm², a tenacity of at least 4.5g/d, and an elongation at break less than or equal to 30%.

In a preferred embodiment of the invention, the flexible ground fabric and the fiber layer form a laminated body having the fiber layer on one side and the ground fabric located toward the opposite side, and the outer surface of the laminated body, on said opposite side, is impregnated and covered with a heat-resistant resin.

In accordance with the invention, since the ground fabric is constituted by a fiber material having high strength, low elongation and a resistance against heat of 150°C or more, the belt is characterized by excellent durability and dimensional stability even under high temperatures and heavy loads.

The ground fabric can be relatively low in yarn density and flexible, and is thus easily joined with the fiber layer by needle punching. By joining the heat resistant fiber layer to the ground fabric by needle punching, it is possible to obtain an integrally formed belt having suitably flexibility. Accordingly, even under high temperatures and high mechanical loads, the ground fabric does not separate from the heat resistant fiber layer. Since the heat resistant fiber layer has an insulating function, the heat of the aluminum shapes is not transmitted through it to the ground fabric. Therefore, there is very little thermal deterioration of the ground fabric.

Because belt of the invention is an integral structure comprising a ground fabric having low elongation and flexibility and a heat resistant fiber layer, the belt extends very little, even when subjected to the mechanical and thermal stress. Consequently, it is possible to achieve a belt having excellent durability and dimensional stability, and a long useful life.

By impregnating and covering the lower surface of the needle-punch laminated belt with a heat resistant resin, it is possible to improve the friction coefficient between the conveying belt and its drive pulley and hence to prevent slipping of the belt. The resin layer also reduces wear of the lower surface of the belt.

Other objects, advantages and details of the invention will be apparent from the following detailed description when read in conjunction with the drawings.

### Brief Description of the Drawings

FIG. 1 is a sectional view showing the construction of a conveying belt according to the invention; and
FIG. 2 is a sectional view showing the construction of the conveying belt according to an alternative embodiment of the invention.

### Detailed Description

A basic requirement of the conveying belt in accordance with the invention is dimensional stability, and in particular resistance to extension when tensile forces are applied. Another basic requirement of the belt is that it be resistant to deterioration and to dimensional changes as a result of heat conducted to the belt from high temperature articles, such as aluminum shapes, being carried on the belt.

In order to achieve dimensional stability and resistance to deterioration, the yarn of the ground fabric is made up of fibers having high strength, low elongation and high resistance to heat. A para-aromatic polyamide fiber is especially suitable as the yarn of the ground fabric of a belt used for carrying shapes at relatively high temperatures. For conveying belts between stages remote from the extruder or mold, where the temperature of the shapes is relatively low, a polyester fiber may be used in the warp yarns.

In the conveying belt, the surface which comes into contact with the high temperature shapes is constituted by a heat resistant fiber layer. Therefore, the temperature to which the ground fabric is heated is lower than that of the conveyor belt surface. Accordingly, the fiber material of the ground fabric may be selected from fiber materials resistant to heat according to the temperature of the products being conveyed. Preferably the fiber material of the ground fabric is resistant to heat at temperatures of at least 150°C.

A suitable ground fabric may consist of a multi-filament yarn and a span yarn. The ground fabric is integrally joined to the heat resistant fiber layer by needle punching. In order to minimize the elongation of the ground fabric, its warp is desirably constituted by a continuous filament yarn.

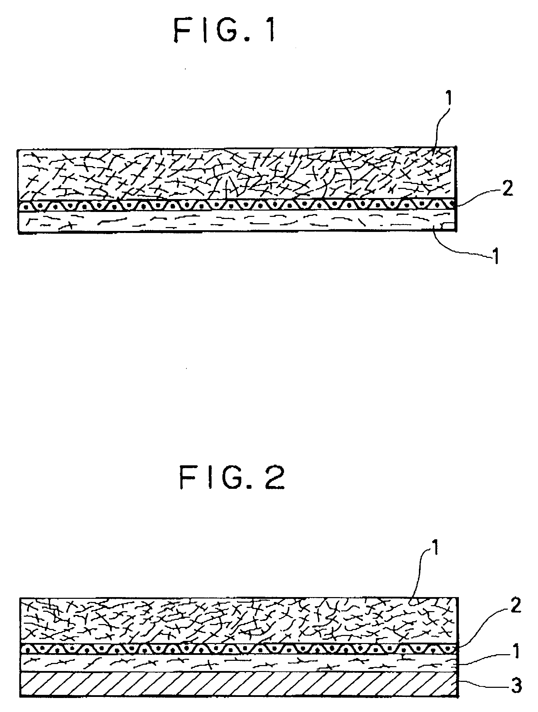

In one embodiment of the belt in accordance with the invention, as depicted in FIG. 1, the ground fabric 2 is woven from a multi-filament yarn (1500d) of a poly-paraphenylene terephthalic amide (trade name: "Kevlar") as the warp, and a multi-filament yarn (1000d) of a polyester fiber as the weft. The ground fabric 2 was woven at a density of 40 warp/25mm and 40 weft/25mm. A batt layer 1 of heat resistant fibers was laminated on the ground fabric 2. Batt layer 1 preferably consists of 70% Kevlar fiber mixed with 30% carbon fiber. A second, thin layer 1 of the same heat resistant fiber composition is laminated to the hack surface of the ground fabric 2. Subsequently, both the ground fabric 2 and the first heat resistant fiber layer 1 were needle punched from the ground fabric side, i.e. the bottom as shown in FIG. 1, in order to joined the two principal layers to each other integrally. After that, the thin fiber layer underneath the ground fabric 2 is integrally joined to the ground fabric by needle punching from the opposite side of the ground fabric. The needle punching operations are performed at a rate of 1500 needles/cm². The belt material shown in FIG. 1, consisting of two heat-resistant fiber layers 1 integrally laminated by needle punching to both sides of the ground fabric 2, is preferable over a simpler version comprising only a single heat-resistant layer and on one side of the ground fabric. The belt material depicted in FIG. 1 exhibits excellent durability and dimensional stability even under high temperatures and heavy loads.

In order to improve the friction coefficient between the conveying belt and the drive pulley, and to protect the ground fabric 2, or the thin heat resistant fiber layer 1 if present underneath the ground fabric, the surface of the laminate, on the side having the thin heat resistant fiber layer 1, i.e. the surface of the laminate of FIG. 2, is impregnated and covered with a heat-resistant resin to form a heat-resistant resin layer 3. A suitable heat resistant resin comprises 1000g/m² of a silicone rubber combined with an inorganic filler. After application, the resin is dried at a temperature of 120°C for 90 minutes. The friction coefficient can be adjusted by adjusting the ratio of the silicone rubber to the inorganic filler.

A typical belt in accordance with the invention, and corresponding to FIG. 2, has a thickness of 11 mm and a density of 0.4g/cm³. It is cut to a width of 95 mm has a length of 9470 mm., and is formed into an endless belt.

The performance of the conveying belt just described was compared with that of a conventional belt designed for use in conjunction with a cooling table in an aluminum shape manufacturing process. The conventional belt had a thickness of 11 mm. It was formed by using an adhesive to secure a needle-punched, non-woven fabric having the same construction of the heat resistant fiber layer of the present belt, onto a ground fabric formed from two canvas layers of polyester span yarn, each having a weight of 800g/ m², laminated to each other by a urethane resin. The belt of the invention and the conventional belt were both used for the same table, to carry aluminum shapes at a temperature in the range of 250-450°C.

The belt in accordance with the invention had an initial elongation of 1% or less. After continuous use, the increase in the elongation of the belt was so small as to be almost unrecognizable. On the contrary, the conventional belt had an initial elongation of about 3%, and its elongation increased appreciably with time. After a period of continuous use of the conventional belt, partial separation occurred at the adhesive layer between the non-woven fabric layer and the ground fabric. Finally, the conventional belt became impossible to use. The comparison between the belt of the invention and the conventional belt revealed that the belt of the invention was excellent in heat resistance and dimensional stability and was able to maintain stable performance for a long period.

According to the invention, a conveying belt of a suitably flexible integral structure, is formed by integrally joining, by needle punching, a heat resistant fiber layer to a flexible ground fabric comprising a fiber material having high strength, low elongation and a resistance against heat of at least 150°C. Since the ground fabric is formed from fibers having high strength and low elongation the extension of the belt is small. Also, since the heat of the formed products being carried by the belt is prevented from being directly transmitted to the ground fabric by the insulating function of the heat resistant fiber layer, thermal deterioration of the ground fabric is substantially reduced, and dimensional variations of the ground fabric are maintained at extremely low levels for a long periods of time. Since the conveying belt is of a suitably flexible integral structure, which is formed by strongly joining the heat resistant fiber layer to the ground fabric by needle punching, separation of the fiber layer from the ground fabric is avoided, even under high temperatures and heavy loads. Consequently, the tendency of the ground fabric to fray is greatly reduced.

The conveying belt in accordance with the invention exhibits a very small extensibility, achieves the excellent durability under mechanical and thermal stresses, and can be stably used for a long period.

Further, since the lower surface of the laminated belt structure, which is integrally joined by needle punching to the upper layer or layers, is impregnated with, and covered by, heat resistant resin, it is possible to improve the friction coefficient between the conveying belt and the drive pulley, in order to stabilize the running of the belt, and to protect the ground fabric, and the thin heat resistant fiber layer if present in order to achieve further improvement in the service life of the conveying belt.

Various modifications can be made to the conveying belt described above.

For example, while the belt described above utilizes two heat-resistant fiber layers 1, laminated in both surfaces of the ground fabric 2, it is possible to utilize only one heat resistant fiber layer 1, laminated on only one surface of the ground fabric 2.

Also, while in the specific example described, the ground fabric 2 was formed from para-aromatic polyamide fiber and polyester fiber, the ground fabric is not necessarily limited to these materials. It may be formed from any of many fiber materials having high strength, low elongation and heat resistance of at least 150°C. Preferably the ground fabric has an initial modulus of at least 300kg/mm² or more, a tenacity of at least 4.5g/d, and an elongation at break less than or equal to 30 %. Preferred fiber materials for the ground fabric include one or more materials selected from the group consisting of para-aromatic polyamide fibers, meta-aromatic polyamide fibers, polyester fibers, polyacrylate fibers and stainless fibers. At least in the warp of the ground fabric, a continuous yarn is preferably used.

Whereas in the specific example described the heat resisting fiber layer was formed from a mixture of carbon fiber and Kevlar fiber other heat resistant fiber materials can be used. For example, the heat resistant layer may be formed of a meta-aromatic polyamide fiber or a paraaromatic polyamide fiber or a combination thereof. It is possible to improve the thermal durability of the belt by combining these heat-resistant organic fibers, as main components, with inorganic fibers much as a glass fiber, ceramic fibers, metallic fibers or the like, or by adding inorganic fibers as a separate layer,

Although silicone rubber was described as a heat-resistant resin, other resins resin having a resistance against heat of 150°C or more can be used. Examples of such resins include an ethylene acryl rubber, a fluorocarbon rubber or the like. Inorganic fillers are not necessarily added to the heat-resistant resin.

While the invention has been described in the context of a conveying belt used for aluminum shape manufacturing, it the conveying belt in accordance with the invention has many other potential applications, and may be used, for example, as a belt for conveying formed products such as glass or the like at high temperatures.

Numerous other modifications can be made to the invention described herein without departing from the scope of the invention as defined in the following claims.

## Claims

1. A conveying belt for conveying hot articles such as aluminum extrusions or glass moldings from a molding or extruding apparatus comprising:
a flexible ground fabric composed of a fiber material having sufficiently high strength and sufficiently low elongation to support said articles without breaking and without excessive stretching; and
a fiber layer composed of heat-resistant fibers joined to at least one surface of said flexible ground fabric;
wherein the improvement comprises the fact that said fiber material of the flexible ground fabric has a resistance to heat of at least 150°C, and the fact that said fiber layer composed of heat resistant fibers is integrally joined to said flexible ground fabric by needle punching.

2. A conveying belt according to claim 1, wherein the fiber material of laid ground fabric comprises a fiber having an initial modulus of at least 300kg/mm², a tenacity of at least 4.5g/d and an elongation at break less than or equal to 30%.

3. A conveying belt according to claim 1 wherein the flexible ground fabric and the fiber layer form a laminated body having said fiber layer on one side and the ground fabric located toward the opposite side, and wherein the outer surface of said laminated body, on said opposite side, is impregnated and covered with a heat-resistant resin.

4. A conveying belt according to claim 2 wherein the flexible ground fabric and the fiber layer form a laminated body having said fiber layer on one side and the ground fabric located toward the opposite side, and wherein the outer surface of said laminated body, on said opposite side, is impregnated and covered with a heat-resistant resin.
